(19) Europäisches Patentamt
European Patent Office
Office européen des brevets

(11) EP 4 606 868 A1

(12) EUROPEAN PATENT APPLICATION
published in accordance with Art. 153(4) EPC

(43) Date of publication:
**27.08.2025 Bulletin 2025/35**

(21) Application number: **23917659.7**

(22) Date of filing: **30.11.2023**

(51) International Patent Classification (IPC):
***C09B 67/20*** *(2006.01)* ***C09B 35/22*** *(2006.01)*
***C09B 67/46*** *(2006.01)*

(52) Cooperative Patent Classification (CPC):
**C09B 35/22; C09B 67/006; C09B 67/0084**

(86) International application number:
**PCT/JP2023/042854**

(87) International publication number:
**WO 2024/154447 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.01.2023 JP 2023004971**

(71) Applicant: **DIC Corporation**
**Tokyo 174-8520 (JP)**

(72) Inventors:
- **HAMADA, Jumpei**
  **Kamisu-shi, Ibaraki 314-0193 (JP)**
- **YAMADA, Shogo**
  **Kamisu-shi, Ibaraki 314-0193 (JP)**
- **KIMURA, Akira**
  **Kamisu-shi, Ibaraki 314-0193 (JP)**

(74) Representative: **TBK**
**Bavariaring 4-6**
**80336 München (DE)**

# (54) PIGMENT COMPOSITION, AQUEOUS PIGMENT DISPERSION FOR INKJET INK AND AQUEOUS PIGMENT INK

(57) An object of the present invention is to provide a pigment composition with excellent storage stability and dispersion stability, which is especially suitable for aqueous pigment ink applications for IJ. Specifically, the pigment composition of the present invention contains C.I. Pigment Yellow 180 and a derivative with a zeta potential of -20 mV or more and less than 0 mV and a solubility parameter of 21 or less. An aspect ratio of the C.I. Pigment Yellow 180 is preferably from 1.0 to 2.0. The derivative is preferably a derivative of the C.I. Pigment Yellow 180. The derivative preferably has a sulfonic acid group. A trivalent metal in a trivalent metal salt of the derivative is preferably at least one metal selected from the group consisting of iron, chromium, cobalt, and aluminum.

EP 4 606 868 A1

## Description

### Technical Field

The present invention relates to a pigment composition containing C.I. Pigment Yellow 180, an aqueous pigment dispersion for inkjet (hereinafter referred to as "IJ") ink containing the same, and an aqueous pigment ink.

### Background Art

IJ printers are widely employed not only for home use but also for industrial applications in response to a trend toward small lot printing. In recent years, IJ business has expanded to textile applications and flexible packaging applications. Yellow ink is important as a primary ink along with cyan, magenta, and black inks. In recent years, aqueous inks have become the mainstream in inks used in IJ printers. Pigments used in the aqueous inks are required to have easy dispersibility in an aqueous system in addition to color strength and light resistance.

As a yellow pigment for yellow ink, C.I. Pigment Yellow 180 (hereinafter sometimes referred to as "Y180"), which is one of benzimidazolone yellow pigments, has attracted attention in terms of achieving both of color strength and light resistance. An example of the use of Y180 as an ink for IJ can be found, for example, in PTL 1 below. PTL 1 discloses a use of a benzimidazolone yellow pigment such as Y180 together with a derivative (amine salt, ammonium salt or monovalent metal salt) of a pigment, such as Y180, including a sulfonic acid group.

### Citation List

### Patent Literature

PTL 1: Japanese Unexamined Patent Application Publication No. 2002-220557

### Summary of Invention

### Technical Problem

The inventors of the present invention have examined conventional pigment compositions containing Y180, such as those in PTL 1. As a result, it is found that the pigment compositions do not have sufficient storage stability or dispersion stability when made into IJ inks. In view of the above, an object of the present invention is to provide a pigment composition with excellent storage stability and dispersion stability, which is especially suitable for use in an aqueous pigment ink for IJ.

### Solution to Problem

As a result of diligent study to achieve the above object, the inventors have discovered a use of a derivative having a specific zeta potential and solubility parameters for Y180 and completed the present invention. A mechanism of the present invention is as follows.

Y180 pigment, which has highly hydrophilic functional groups and bonds in the molecular structure, exhibit excellent wettability in water and, consequently, tend to show good initial dispersion. However, it is presumed that water interferes over time with the interaction between the pigment and resin, causing agglomeration of the pigment and leading to poor dispersion stability. Therefore, it is believed to be important to increase the degree of resin adsorption using a derivative. Generally, particles with a large absolute value of zeta potential are considered to have high dispersion stability due to electrostatic repulsion. However, the present invention uses a derivative with a small absolute value of zeta potential to improve the dispersion stability. This is because, while derivatives must be adsorbed on the pigment particle surface to obtain the dispersion stability effect of the derivatives, derivatives with a large absolute zeta potential cannot be densely adsorbed on the pigment particle surface due to electrostatic repulsion. In addition, by using pigment particles with a small aspect ratio, even higher dispersion stability can be obtained. Pigment particles with a large aspect ratio, which means low dispersion stability, have an elongated rod-like shape. Since Y180 pigment particles stack to grow through $\pi$-$\pi$ stacking, a short-axis surface of the rod-shaped particles inevitably becomes a $\pi$-stacking plane. $\pi$-$\pi$ stacking acts in water as a strong force for the derivatives to adsorb on pigment particles, where the $\pi$ stacking plane at the short-axis surface is the point for the derivatives to be adsorbed. Pigment particles with a large aspect ratio have poor dispersion stability due to a large area ratio of a long-axis surface, to which the derivative is not adsorbed. In contrast, pigment particles with a small aspect ratio, which have a high area ratio of the short-axis surface for the derivative to be adsorbed, exhibit strong dispersion stability effect of the derivative. For pigment particles with a small aspect ratio, a distance between two short-axis surfaces of a single pigment particle is short because of the small aspect ratio, where an action occurred on one of the short-axis

surfaces greatly affects the other. As mentioned above, electrostatic repulsion of the derivative itself can be an obstacle when the derivative adsorbs on the pigment particles. Therefore, if a derivative with a large absolute zeta potential is to be adsorbed on a particle with a small aspect ratio, a sufficient effect cannot be achieved due to the electrostatic repulsion caused between the two short-axis surfaces in the same pigment particle. Therefore, it is assumed that a combined use of particles with a small aspect ratio and particles with a small absolute zeta potential minimizes the electrostatic repulsion of the derivative and maximizes the adsorption of the derivative on the pigment particles, resulting in a Y180 pigment composition with specifically high dispersion stability.

As mentioned above, the area ratio of the short-axis surface increases in pigments with a small aspect ratio, making it easier for derivatives to be adsorbed. However, the highly hydrophilic Y180 also makes it easier for water to be adsorbed, and water can interfere with the once adsorbed derivative, causing poor dispersion stability. In addition, derivatives with large solubility parameters tend to cause poor dispersion due to the high affinity between the derivative and water, which enhances the effect of inhibiting adsorption on the pigment and also enhances the interaction between the pigment and water. Therefore, it is assumed that the use of derivatives with small solubility parameters restrains the derivatives from being released from the pigment and further weakens the interaction between water and the pigment, resulting in a Y180 pigment composition with high dispersion stability.

Specifically, the present invention relates to the following.

Item 1. A pigment composition containing C.I. Pigment Yellow 180 and a derivative with a zeta potential of -20 mV or more and less than 0 mV and a solubility parameter of 21 or less.

Item 2. The pigment composition according to Item 1, wherein an aspect ratio of the C.I. Pigment Yellow 180 is from 1.0 to 2.0.

Item 3. The pigment composition according to Item 1 or 2, wherein the derivative is a derivative of the C.I. Pigment Yellow 180.

Item 4. The pigment composition according to any one of Items 1 to 3, wherein the derivative has a sulfonic acid group.

Item 5. The pigment composition according to any one of Items 1 to 4, wherein the derivative is a salt of a trivalent metal and the trivalent metal is at least one metal selected from the group consisting of iron, chromium, cobalt, and aluminum.

Item 6. An aqueous pigment dispersion for inkjet ink containing the pigment composition according to any one of Items 1 to 5.

Item 7. An aqueous pigment ink for inkjet containing the pigment composition according to any one of Items 1 to 5.

Advantageous Effects of Invention

The pigment composition of the present invention shows small changes in viscosity and particle size over time and is excellent in dispersion stability and storage stability. Therefore, the pigment composition is suitable for aqueous IJ ink applications.

Description of Embodiments

The present invention will be described in detail below. In the present invention, Y180 does not simply mean the compound shown in [Chemical Formula 1] below, but also means a pigment made of the compound. The term "pigment" covers the concepts of not only the crystal structure of the pigment but also primary particles formed by agglomeration or aggregation of the crystal structure and the physical properties as the agglomeration or aggregation resulting from surface conditions and other factors of the particles.

[Pigment Composition]

A pigment composition of the present invention contains Y180 and a derivative with a zeta potential of -20 mV or more and less than 0 mV and a solubility parameter of 21 or less. Generally, such a derivative is called a pigment derivative (synergist). In addition to the pigment such as Y180 and the derivative, the pigment composition of the present invention optionally contains other solid component(s) such as a resin for improving dispersibility.

(Pigment)

Y180, whose CAS No. is 77804-81-0, is a yellow pigment represented by the chemical formula below. The pigment composition of the present invention only needs to contain Y180 as a colorant, and may contain pigment(s) and/or dye(s) other than Y180 to an extent not impairing effects of the present invention.

[Chemical Formula 1]

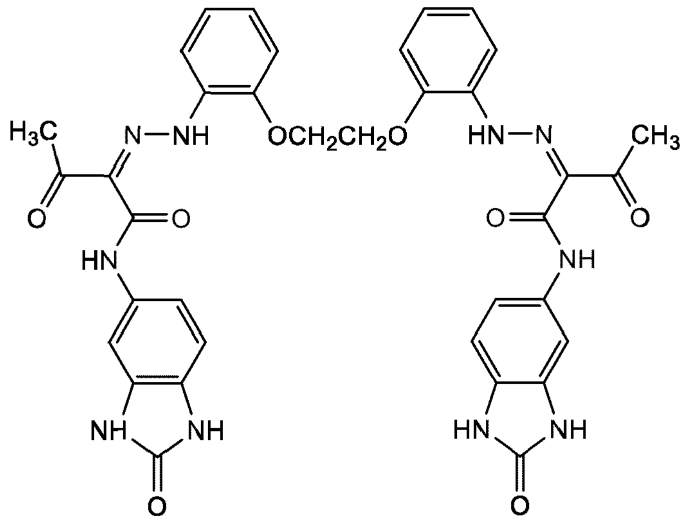

Y180 can be produced by coupling 5-acetoacetylamino-benzimidazolone with a bisdiazonium salt solution produced by a diazotization reaction of 1,2-bis(2-aminophenoxy)-ethane with aqueous sodium nitrite in the presence of a strong acid under ice-cold conditions.

The aspect ratio of the above Y180 is preferably from 1.0 to 2.0, more preferably 1.0 to 1.9, and even more preferably 1.0 to 1.8. When the aspect ratio is in the above range, agglomeration of pigment particles can be restrained, resulting in a smaller particle size and excellent dispersion stability and storage stability when used as an aqueous pigment dispersion/ink for IJ ink.

The minor radius of primary particles of the above Y180 is, for example, rom 30 to 100 nm, preferably 30 to 80 nm, and more preferably 30 to 50 nm. When the minor radius of the primary particles is in the above range, the particle size of the pigment in the dispersion/ink can be reduced, resulting in excellent print density (OD) when used as an aqueous pigment dispersion or an ink for IJ ink.

The major radius of primary particles of the above Y180 is preferably designed so that the aspect ratio and minor radius fall in the above ranges, and is, for instance, from 30 to 150 nm, preferably 30 to 100 nm, and more preferably 30 to 80 nm. The minor and major radii of the primary particles and the aspect ratio calculated from the radii can be obtained by observing the primary particles of the pigment with an electron microscope and calculating an average of measured lengths of, for example, 100 primary particles of the pigment.

Y180 of the present invention, which is optionally an ordinary synthetic product produced by coupling a bisdiazonium salt solution obtained by a diazotization reaction of 1,2-bis(2-aminophenoxy)-ethane with an aqueous sodium nitrite solution in the presence of a strong acid under ice-cold conditions with 5-acetoacetylamino-benzimidazolone or a commercially available product such as "SYMULER FAST YELLOW BY 2000GT" (manufactured by DIC Corporation), is preferably produced by further applying a specific treatment.

The above specific treatment is, for example, grinding (solvent salt milling) 100 parts by mass of pigment (crude pigment) with 200 to 1000 parts by mass of an inorganic salt added thereto, while heating in the presence of a solvent. By grinding the pigment while heating in the presence of the solvent, the primary particle size can be reduced to a specific range while improving the degree of crystallinity of the pigment.

A water-soluble inorganic salt can be suitably used as the above inorganic salt. Preferable examples of the usable water-soluble inorganic salt are sodium chloride, potassium chloride, and sodium sulfate. The use of an inorganic salt with an average particle size ranging from 0.5 to 50 μm is more preferable. Such an inorganic salt is easily obtained by pulverizing ordinary inorganic salts. The amount of the inorganic salt to be used is, for example, 200 to 1000 parts by mass, and preferably 300 to 800 parts by mass for 100 parts by mass of the pigment. Although a larger amount of the inorganic salt is preferable in order to produce finer pigment particles, the above range is preferable in the present invention in terms of balance with crystallinity.

It is preferable to use an organic solvent that can inhibit crystal growth as the above solvent. Water-soluble organic solvents are suitably usable as such organic solvents, examples of which include diethylene glycol (DEG), glycerin, ethylene glycol, propylene glycol, liquid polyethylene glycol, liquid polypropylene glycol, 2-(methoxymethoxy) ethanol, 2-butoxyethanol, 2-(isopentyloxy)ethanol, 2-(hexyloxy)ethanol, diethylene glycol monomethyl ether, diethylene glycol monoethyl ether, diethylene glycol monobutyl ether, triethylene glycol, triethylene glycol monomethyl ether, 1-methoxy-2-propanol, 1-ethoxy-2-propanol, dipropylene glycol, and dipropylene glycol monomethyl ether. Diethylene

glycol (DEG) is particularly preferable because DEG can be heated to a suitable temperature and has excellent wettability with pigments. The amount of the solvent used is, for example, from 10 to 500 parts by mass, and preferably 50 to 300 parts by mass per 100 parts by mass of the pigment in order to provide appropriate viscosity at the time of grinding.

The above grinding (solvent salt milling) is performed by charging the pigment, an inorganic salt, and a solvent that does not dissolve the pigment and inorganic salt, in a kneading machine and kneading the pigment, the inorganic salt, and the solvent in the kneading machine. Examples of the kneading machine usable for this process include kneaders, trimixes, and mix mullers. The heating temperature during grinding (solvent salt milling) is, for example, from 50 to 100°C, and preferably 60 to 90°C. The heating temperature can be changed as appropriate by a temperature control device provided in the kneading machine. The time for grinding (solvent salt milling) is, for example, from 2 to 10 hours, and preferably 3 to 8 hours.

The pigment composition of the present invention may contain yellow pigment(s) and dye(s) other than Y180. Examples of such yellow pigments are azo pigments, disazo pigments, azomethine pigments, anthraquinone pigments, quinophthalone pigments, benzimidazolone pigments, isoindoline pigments, quinacridone pigments, and perinone pigments. Specific examples of the yellow pigments include C.I. Pigment Yellow 1, 2, 3, 12, 13, 14, 16, 17, 20, 23, 24, 34, 35, 37, 53, 55, 73, 74, 75, 81, 83, 86, 93, 95, 97, 98, 100, 101, 104, 108, 109, 110, 114, 117, 120, 125, 128, 129, 137, 138, 139, 147, 148, 150, 151, 153, 154, 155, 166, 168, 185, and 213. The pigment composition may also contain dye(s) and pigment(s) other than the above yellow pigments. In the pigment composition of the present invention, Y180 preferably accounts for 50% by mass or more, and more preferably 60% by mass or more of the total pigment.

The content (or the total content if two or more types of the pigments are contained) of the pigment in the pigment composition is, for example, from 50 to 99% by mass, preferably 60 to 98% by mass, and more preferably 70 to 98% by mass.

Copolymer resins such as styrene-(meth)acrylic acid copolymer, styrene-maleic acid copolymer, diisobutylene-maleic acid copolymer, vinylnaphthalene-(meth)acrylic acid copolymer, urethane resins, surfactants, and the like may be used as resins for improving dispersibility (dispersion resins) described above. The content of these dispersion resins is, for example, from 3 to 30 parts by weight, and preferably 5 to 20 parts by weight for 100 parts by weight of the pigment such as Y180.

(Derivative)

The zeta potential of the above derivative is -20 mV or more and less than 0 mV, preferably -18 mV or more and less than 0 mV, and even more preferably -16 mV or more and less than 0 mV. When the zeta potential is in the above range, the derivative can be easily adsorbed on the Y180 pigment, resulting in improved dispersion stability of the pigment composition. The zeta potential can be measured by electrophoretic light scattering measurement (laser Doppler method) using a zeta potential, particle size, and molecular weight measurement system (product name ELSZ-2000ZS; manufactured by Otsuka Electronics Co., Ltd.) or the like.

The solubility parameter (SP) of the above derivative is 21 or less, and preferably 20 or less. The affinity with the Y180 pigment is high when the solubility parameter (SP) is in the above range, and as a result, an increase in viscosity of the pigment composition over time can be restrained and storage stability can be improved. The solubility parameter (SP) can be determined by mixing the derivative with an acetone or other solvent whose solubility parameter is known and measuring an SP value of the mixed solution when the pigment is completely wetted.

Examples of the above derivative are C.I. Pigment Yellow 1, 2, 3, 12, 13, 14, 16, 17, 20, 23, 24, 34, 35, 37, 53, 55, 73, 74, 75, 81, 83, 86, 93, 95, 97, 98, 100, 101, 104, 108, 109, 110, 114, 117, 120, 125, 128, 129, 137, 138, 139, 147, 148, 150, 151, 153, 154, 155, 166, 168, 180, 185, and 213, among which the derivative of Pigment Yellow 180 (Y180) is preferable in terms of excellent dispersion stability and storage stability when used in a pigment composition. Y180 for the above derivative is the yellow pigment (CAS No. 77804-81-0) represented by the above-described chemical formula for the pigment.

The above derivative may have an acid group such as a carboxylic acid group, a hydroxyl group, and a sulfonic acid group, among which the sulfonic acid group is preferable. The sulfonic acid group is a group represented by-$SO_3H$ or a group in a form of an organic compound with a sulfo group substituted on a carbon skeleton (-$RSO_3H$, where R is an alkyl or aryl group). In the present invention, the sulfonic acid group is preferably a group represented by - $SO_3H$. The number of sulfonic acid groups (average number of substituents) possessed by the above derivative is, for example, from 1 to 4, preferably 1 to 3, and more preferably 1 or 2. When the number of sulfonic acid groups (average number of substituents) is in the above range, dispersion stability and storage stability of Y180 are improved.

The above derivative may contain both or one of: a compound with one sulfonic acid group introduced in a single molecule (monosubstituted derivative); and a compound with two sulfonic acid groups introduced in a single molecule (disubstituted derivative).

The molar ratio of the monosubstituted derivative to the disubstituted derivative (SN ratio (disubstituted derivative/monosubstituted derivative)) in the above derivative is, for example, 0.1 or more, preferably 0.1 to 30.0,

and more preferably 0.5 to 5.0. When the SN ratio of the sulfonic acid group is in the above range, the dispersion stability and storage stability of Y180 are improved.

The average number of substituents and the SN ratio of the sulfonic acid group of the above derivative can be calculated based on the area ratio of compounds in liquid chromatography.

To introduce the sulfonic acid group into the derivative of Y180 and the like, for example, a sulfonating agent such as fuming sulfuric acid, concentrated sulfuric acid, or chlorosulfuric acid simply have to be applied to the derivative. The number of sulfonic acid groups can be adjusted by controlling reaction conditions such as the concentration of the sulfuric acid, pigment content, reaction temperature, and reaction time. The pigment content herein refers to the weight ratio of Y180 to the sulfuric acid (amount of charged pigment/amount of charged sulfuric acid).

The sulfuric acid concentration is, for example, from 92 to 100% by weight, preferably 92 to 98% by weight, and more preferably 95 to 98% by weight.

The pigment content is, for example, from 0.04 to 0.08, preferably 0.04 to 0.07, and more preferably 0.05 to 0.07.

The reaction temperature is, for example, from 5 to 30°C, preferably 5 to 20°C, and more preferably 10 to 20°C.

The reaction time is, for example, from 0.5 to 5 hours, preferably 0.5 to 4 hours, and more preferably 1 to 4 hours.

The above derivative is preferably a trivalent metal salt. Examples of the trivalent metal of the trivalent metal salt include iron, chromium, cobalt, aluminum, gallium, indium, and thallium, among which at least one metal selected from the group consisting of iron, chromium, cobalt, and aluminum is preferable in terms of capability for keeping the zeta potential in an appropriate range and of practicality. The trivalent metal salt is a compound in which the hydrogen atom (H) of the above sulfonic acid group is replaced with an ion of the above metal. Aluminum is preferable for economic and performance reasons.

The above derivative may be a pigment derivative (synergist) other than those listed above, if necessary. An example of such a derivative is a pigment derivative that includes a pigment skeleton and substituent(s) added to the pigment skeleton. Specifically, an azo pigment derivative, a disazo pigment derivative, an azomethine pigment derivative, an anthraquinone pigment derivative, a quinophthalone pigment derivative, a benzimidazolone pigment derivative, an isoindoline pigment derivative, a quinacridone pigment derivative, and a perinone pigment derivative can be used. Examples of the derivative portion include a hydroxyl group, a carboxylic acid group, and a sulfonic acid group. Two or more of these derivatives of different types can be used together.

The content (or the total content if two or more derivatives are contained) of the above derivative is, for example, from 0.5 to 30 parts by weight, preferably 1.0 to 20 parts by weight, and more preferably 2.0 to 15 parts by weight for 100 parts by weight of the pigment such as Y180. The content (or the total content if two or more derivative are contained) of the derivative in the pigment composition is, for example, from 0.5 to 30% by mass, preferably 1.0 to 20% by mass, and more preferably 2.0 to 15% by mass. When the derivative content is in the above range, the adsorption effect of the derivative on the pigment can be in an appropriate range, resulting in improved dispersion stability and storage stability of the pigment composition.

(Aqueous Pigment Dispersion for IJ Ink)

The aqueous pigment dispersion for IJ ink of the present invention, whose component is not limited as long as the pigment composition of the present invention and a solvent for dispersing the pigment composition are contained, may also contain other component(s) such as dispersing agents, as necessary.

The aqueous pigment dispersion for IJ ink may use a water-soluble organic solvent as the solvent along with water. Examples of such a water-soluble organic solvent include alcohols such as methanol, ethanol, propanol, isopropanol (2-propanol), n-butanol, isobutanol, 1,2-hexanediol, and 1,6-hexanediol, ketones such as acetone and methyl ethyl ketone, polyalkylene glycols such as ethylene glycol, diethylene glycol, and propylene glycol, alkyl ethers of polyalkylene glycol, and lactams such as N-methyl-2-pyrrolidone. The organic solvents can be used alone or in combination of two or more thereof.

The content of the water-soluble organic solvent in a total mass of the aqueous pigment dispersion for IJ ink is, for example, about 0 to 60%, and preferably 0 to 45%. The remainder other than the pigment dispersion for IJ ink (nonvolatile component) is mostly water.

[Aqueous Pigment Ink for IJ].

The aqueous pigment ink for IJ, whose component is not limited as long as the pigment composition of the present invention and the solvent are contained, may also contain yellow pigment(s) and dye(s) other than Y180. Examples of such yellow pigments are azo pigments, disazo pigments, azomethine pigments, anthraquinone pigments, quinophthalone pigments, benzimidazolone pigments, isoindoline pigments, quinacridone pigments, and perinone pigments. Specific examples of the yellow pigments include C.I. Pigment Yellow 1, 2, 3, 12, 13, 14, 16, 17, 20, 23, 24, 34, 35, 37, 53, 55, 73, 74, 75, 81, 83, 86, 93, 95, 97, 98, 100, 101, 104, 108, 109, 110, 114, 117, 120, 125, 128, 129, 137, 138, 139, 147, 148, 150, 151,

153, 154, 155, 166, 168, 185, and 213. The pigment composition may also contain dye(s) and pigment(s) other than the above yellow pigments. When the yellow pigment(s) or dye(s) other than Y180 are mixed, there are no particular restrictions on the mixing method. Such yellow pigment(s) or dye(s) can be mixed as a pigment composition at the stage of producing the aqueous pigment dispersion or as a pigment dispersion at the stage of producing the aqueous pigment ink for IJ. It is preferable that Y180 accounts for 10% by mass or more, and more preferably 20% by mass or more of the total pigment in the aqueous pigment ink for IJ of the present invention.

An additive is optionally contained in the aqueous pigment ink for IJ as necessary. Examples of the additive include preservatives, pH adjusters, chelating reagents, rust inhibitors, water-soluble UV absorbers, water-soluble polymer compounds, antioxidants, water-dispersible resins, and surfactants. Examples of the surfactants include anionic, cationic, nonionic, amphoteric, silicone, and fluorinated surfactants. The ink concentration of the aqueous pigment ink is optionally further adjusted by adding water and/or a water-soluble organic solvent.

The content (or the total amount if two or more types of additives are contained) of the additive in the total mass of the aqueous pigment ink for IJ is approximately 0 to 30%, and preferably 0 to 15%. The content of the pigment in the aqueous pigment ink is, for example, from 1 to 15% by mass, and preferably 2 to 10% by mass.

The viscosity (25°C) of the aqueous pigment ink for IJ is preferably from 1 to 30 mPa·s, and more preferably 2 to 20 mPa·s, in terms of improvement in the storage stability of the ink. The pH of the aqueous pigment ink is, for example, 7.0 or higher, and preferably 7.5 or higher, in terms of further improvement in the storage stability of the ink. In terms of durability of components and irritation on skin, the pH is, for example, 11.0 or less, and preferably 10.0 or less.

The aqueous pigment ink for IJ of the present invention can be charged into a known IJ recording device and ejected as ink droplets onto a recording medium to record images or the like. Examples of the IJ recording device include continuous injection type (charge control type, spray type, etc.) and on-demand type (piezoelectric type, thermal type, electrostatic suction type, etc.). The aqueous pigment ink of the present invention can be used in any of these types.

[Examples]

The present invention will be described in further detail below with reference to Examples and Comparative Examples. Derivatives were synthesized by the methods described in Preparation Examples 1 to 15 below, and pigments were synthesized by the methods described in Production Examples 1 and 2. Pigment compositions were prepared using these derivatives and pigments by the methods described in Examples 1 to 9 and Comparative Examples 1 to 10 below. Furthermore, aqueous IJ inks to be evaluated were prepared from these pigment compositions to evaluate these inks. The evaluation results are listed in Tables 3 and 4 below. In the examples, "parts" and "%" mean "parts by weight" and "% by weight", respectively, unless otherwise specified.

(Preparation Example 1) [Synthesis of PY180SA-1]

50 parts of C.I. Pigment Yellow 180 (manufactured by DIC Corporation) was added to 750 parts of 95% sulfuric acid (manufactured by Kanto Chemical Corporation) (pigment content 0.067) at 10°C or less. The mixture was stirred for 2 hours with the temperature being raised to 15°C, and was then put into 1000 g of ice water for precipitation. The mixture was stirred for 30 minutes, filtered, and washed with 5% brine to obtain wet cake of C.I. Pigment Yellow 180 sulfonic acid (PY180SA-1). The wet cake was dried at 90°C and the resulting solid was ground with a juicer mixer to obtain PY180SA-1.

(Preparation Example 2) [Synthesis of PY180SA-2]

Wet cake was obtained in the same manner as the synthesis method in the above Preparation Example 1, except that the content of C.I. Pigment Yellow 180 was changed to 45 parts and the reaction time was changed to 1 hour.

(Preparation Example 3) [Synthesis of PY180SA-3]

Wet cake was obtained in the same manner as the synthesis method in the above Preparation Example 1, except that the sulfuric acid concentration was changed to 98%, the content of C.I. Pigment Yellow 180 was changed to 40 parts, the reaction temperature was changed to 10°C, and the reaction time was changed to 1 hour.

(Preparation Example 4) [Synthesis of PY180SA-4]

Wet cake was obtained in the same manner as the synthesis method in the above Preparation Example 1, except that the sulfuric acid concentration was changed to 98%, the content of C.I. Pigment Yellow 180 was changed to 45 parts, the reaction temperature was changed to 10°C, and the reaction time was changed to 2.5 hours.

(Preparation Example 5) [Synthesis of PY180SA-5]

Wet cake was obtained in the same manner as the synthesis method in the above Preparation Example 1, except that the sulfuric acid concentration was changed to 98%, the content of C.I. Pigment Yellow 180 was changed to 45 parts, the reaction temperature was changed to 20°C, and the reaction time was changed to 1 hour.

(Preparation Example 6) [Synthesis of PY180SA-6]

Wet cake was obtained in the same manner as the synthesis method in the above Preparation Example 1, except that the sulfuric acid concentration was changed to 98% and the reaction time was changed to 4 hours.

(Preparation Example 7) [Synthesis of PY180SA-Al-1]

41 parts of the wet cake of PY180SA-1 (solid content: 23.4% solids) prepared in the above Preparation Example 1 was added to 1000 parts of water and the temperature was raised to 80°C while stirring the mixture. After the wet cake mass disappeared, the pH was adjusted to 12.0 to 12.5 using a 25% aqueous sodium hydroxide solution. Then, after the mixture was stirred for 30 minutes, the mixture was further stirred for 60 minutes after adding 36 parts of aluminum sulfate 14 to 18 hydrate (manufactured by Kanto Chemical Co., Ltd.). After filtration and washing with water, wet cake of aluminum salt of C.I. Pigment Yellow 180 sulfonic acid (PY180SA-Al-1) was obtained. The wet cake was dried at 90°C and the resulting solid was ground with a juicer mixer to obtain PY180SA-Al.

(Preparation Example 8) [Synthesis of PY180-SA-Al-2]

Powder was obtained in the same manner as the synthesis method in the above Preparation Example 7, except that the wet cake used was changed to PY180SA-2.

(Preparation Example 9) [Synthesis of PY180-SA-Al-3]

Powder was obtained in the same manner as the synthesis method in the above Preparation Example 7, except that the wet cake used was changed to PY180SA-3.

(Preparation Example 10) [Synthesis of PY180-SA-Al-4]

Powder was obtained in the same manner as the synthesis method in the above Preparation Example 7, except that the wet cake used was changed to PY180SA-4.

(Preparation Example 11) [Synthesis of PY180-SA-Al-5]

Powder was obtained in the same manner as the synthesis method in the above Preparation Example 7, except that the wet cake used was changed to PY180SA-5.

(Preparation Example 12) [Synthesis of PY180-SA-Al-6]

Powder was obtained in the same manner as the synthesis method in the above Preparation Example 7, except that the wet cake used was changed to PY180SA-6.

(Preparation Example 13) [Synthesis of PY180SA-TA]

Ten parts of PY180SA prepared in the above Preparation Example 1 was added to 200 parts of a 1% aqueous sodium hydroxide solution and the mixture was stirred for 30 minutes. Fifteen parts of triethanolamine (manufactured by Kanto Chemical Co., Ltd.) was added and the mixture was stirred for 60 minutes. The resulting wet cake of triethanolamine salt of C.I. Pigment Yellow 180 sulfonic acid (PY180SA-TA) was obtained by filtration and washing with water. The wet cake was dried at 90°C and the resulting solid was ground with a juicer mixer to obtain PY180SA-TA.

(Preparation Example 14) [Synthesis of PY180SA Analog]

After dispersing 12 parts of 1,2-bis(2-aminophenoxy)-ethane in 72 parts of water, 28.9 parts of 35% hydrochloric acid was added, and a diazo component was produced by dropping 18.1 parts of a 40% aqueous sodium nitrite solution

while adding ice to keep the temperature of the mixture at 5°C or less. 11.6 parts of potassium 4-(acetoacetylamino) benzenesulfonate was dissolved in 150 parts of water, and the entirety of the dissolved solution was dropped on the diazo component at a constant rate. Next, after 13.7 parts of 5-acetoacetylamino-benzimidazolone was dispersed in 218 parts of water, 17.7 parts of a 25% aqueous sodium hydroxide solution was added and dissolved to obtain a coupler component. Water and ice were added to the coupler component to adjust the liquid volume to 500 parts. After adding 1.6 parts of 90% acetic acid to 660 parts of water, the temperature of the solution was adjusted to 20°C. After adjusting the pH to 6.0 by dropping the coupler component, dropping of the diazo component started at a constant rate. To prevent the presence of excess diazonium salt in the acetic acid solution, the coupler component started being dropped simultaneously with the dropping of the diazo solution, and coupling was performed while adjusting the pH of the acetic acid solution to 6.0 by adjusting the dropping rate of the coupler component. While ice or a 5% sodium hydroxide solution was being added as appropriate to maintain the temperature at 20°C and the pH at 6.0 during coupling, the coupling was terminated in about 3 hours. Then, the solution was heated to 90°C and maintained for 1 hour. The wet cake obtained after filtration and washing with water was then dried at 90°C. The resulting solid was ground with a juicer mixer to obtain a PY180SA analog.

(Preparation Example 15) [Synthesis of PY180SA-Al Analog]

41.8 parts of the wet cake of PY180SA analog (solid content: 23.9%) was added to 158.2 parts of water and the temperature was raised to 80°C while stirring the solution. Next, after adjusting the pH to 12.0 to 12.5 with a 25% aqueous sodium hydroxide solution, the solution was stirred for 30 minutes and further stirred for 60 minutes after adding 36 parts of aluminum sulfate 14 to 18 hydrate (manufactured by Kanto Chemical Co., Ltd.). After filtration and washing with water, wet cake of PY180SA-Al analog was obtained. The wet cake was dried at 90°C and the resulting solid was ground with a juicer mixer to obtain the PY180SA-Al analog.

(Production Example 1) [Synthesis of Pigment (Y180)]

After dispersing 225 parts of 1,2-bis(2-aminophenoxy)-ethane in 3300 parts of water, 538.5 parts of 35% hydrochloric acid was added, and a diazo component was produced by dropping 337 parts of a 40% aqueous sodium nitrite solution while adding ice to keep the temperature of the mixture at 5°C or less. Next, after 455 parts of 5-acetoacetylamino-benzimidazolone was dispersed in 3400 parts of water, 595 parts of a 25% aqueous sodium hydroxide solution was added and dissolved to obtain a coupler component. The liquid volumes of the diazo component and the coupler component were adjusted to 6500 and 4500 parts, respectively, by adding water and ice. After adding 30.6 parts of 90% acetic acid to 6500 parts of water, the temperature of the solution was adjusted to 20°C. After adjusting the pH to 6.0 by dropping the coupler component, the diazo component started being dropped at a constant rate. To prevent the presence of excess diazonium salt in the acetic acid solution, the coupler component started being dropped simultaneously with the dropping of the diazo solution, and coupling was performed while adjusting the pH of the acetic acid solution to 6.0 by adjusting the dropping rate of the coupler component. While ice or a 5% sodium hydroxide solution was being added as appropriate to maintain the temperature at 20°C and the pH at 6.0 during coupling, the coupling was terminated in about 3 hours. Then, the solution was heated to 90°C and maintained for 1 hour. The wet cake obtained after filtration and washing with water was then dried at 90°C. The resulting solid was ground with a juicer mixer to obtain Y180 pigment.

(Production Example 2) [Grinding Processing of Pigment (Y180)]

500 parts of yellow powder of Y180 pigment obtained in Production Example 1, 2500 parts of salt, and 500 parts of diethylene glycol were charged in a 15-L Trimix (trademark) (manufactured by INOUE MFG., INC.), and the mixture was ground for 5 hours with the internal temperature maintained in a range from 80°C to 100°C. After the ground pigment composition was fed into warm water at 50°C and stirred to be thoroughly reslurred, filtered, and washed with water, the resulting wet cake was dried at 90°C. The resulting solid was ground with a juicer-mixer to obtain powdery substance.

[Zeta Potential Measurement]

Zeta potential measurement was performed on the derivatives by the following method. The obtained results of each evaluation are listed in Table 1.

The zeta potential was measured using a zeta potential, particle size, and molecular weight measurement system (product name "ELSZ-2000Z", manufactured by Otsuka Electronics Co., Ltd.). First, 5 mg of a sample to be measured and 5 mL of pure water were weighed into a 30-mL sample bottle and dispersed by an ultrasonic cleaner (product name "Bransonic M2800-J", manufactured by Yamato Scientific co., ltd.) for 15 minutes. Then, 100 μL of the dispersion of the sample to be measured and 10 mL of pure water were weighed into a 30-mL sample bottle and dispersed by Bransonic M2800-J for 1 minute. After the prepared measurement solution was injected into a flow cell unit, the cell was

placed in the ELSZ-2000Z to check a scattering intensity. When the scattering intensity was within a proper range for measurement (10000 to 50000 cps), the measurement was continued. When the scattering intensity was outside the proper range, the concentration of the sample to be measured was adjusted to be within the proper range before measurement. Under the measurement conditions described below for the ELSZ-2000Z, the measurement was repeated three times and an average value was determined to be the zeta potential of the sample to be measured in water.

[Measurement Conditions]

Measuring temperature: 25°C
Measurement latency: 300 sec.
Pinhole: 50
Total count: 10 times
Cell measurement position: 0.70/0.35/0.00/-0.35/-0.70
Applied voltage: Fixed
Applied voltage (fixed): 60
Applied voltage waveform type: Auto
Constant current: 51 mA
Lorenz Fit: 1 peak
Zeta potential conversion formula: Smoluchows

[Table 1]

| Derivative | Zeta potential (mV) |
|---|---|
| PY180SA-1 | -38.7 |
| PY180SA-Al-1 | -12.5 |
| PY180SA-Al-2 | -17.0 |
| PY180SA-Al-3 | -12.2 |
| PY180SA-Al-4 | -14.7 |
| PY180SA-Al-5 | -13.8 |
| PY180SA-Al-6 | -14.3 |
| PY180SA-TA | -25.9 |
| PY180SA Analog | -42.7 |
| PY180SA-Al Analog | -19.8 |

[Solubility Parameter Measurement]

Solubility parameters were measured for pigments and derivatives by the following methods. The obtained results of each evaluation are listed in Table 2.

In a 100-mL beaker, 50 mL of pure water and X mL of acetone were added and gently stirred with a stirrer. After 0.1 g of the pigment or derivative was added as the sample to be measured and stirred for 1 minute, the amount of acetone when all the pigment or derivative had sunk was set as X. The solubility parameter (δm) was calculated according to the following formula.

$$\delta m = (50 \times \delta w + X \times \delta a)/(50 + X)$$

$$\delta w = 23.43$$

$$\delta a = 9.75$$

[Table 2]

| Derivative | Solubility Parameter (δm) |
|---|---|
| PY180SA-1 | 23.3 |
| PY180SA-Al-1 | 19.8 |
| PY180SA-Al-2 | 20.6 |
| PY180SA-Al-3 | 19.8 |
| PY180SA-Al-4 | 19.9 |
| PY180SA-Al-5 | 20.0 |
| PY180SA-Al-6 | 20.2 |
| PY180SA-TA | 21.5 |
| PY180SA Analog | 22.4 |
| PY180SA-Al Analog | 20.8 |

(Examples 1 to 9 and Comparative Examples 1 to 10)

20 parts of the pigment obtained in Production Example 2 and 0.6 parts of PY180SA-Al-1 were put into a blender (product name "LAB MILL", manufactured by Osaka Chemical Co., Ltd.) and repeatedly blended for 10 seconds three times to obtain a pigment composition. For Examples 2 to 9 and Comparative Examples 1 to 10, pigment compositions were obtained in the same manner as in Example 1 using the pigments and derivatives listed in Tables 3 and 4 below. As for Comparative Examples 1, 5, 7 and 9, each pigment was directly used without being processed in the mixer.

[Preparation of Aqueous IJ Inks to Be Evaluated]

To 4.0 g of the pigment composition obtained above, 1.8 g of styrene-(meth)acrylic acid copolymer (acid value: 167, active ingredient: 45% by mass) as a dispersant resin, 0.4 g of a 25% by mass aqueous potassium hydroxide solution, 1.0 g of isopropyl alcohol, and 22.8 g of ion exchanged water were added. The total amount of the aqueous pigment dispersion was made to be 30.0 g. Then, 1-mm glass beads were added to the aqueous pigment dispersion and dispersed for 90 minutes using a paint conditioner. The dispersion was then conditioned by adding ion-exchanged water so that the nonvolatile content accounted for 15% by mass of the dispersion. To 9.6 g of the aqueous pigment dispersion, 0.2 g of Surfynol 465 (manufactured by Nissin Chemical Industry Co., Ltd.), 2.3 g of glycerin, 1.7 g of triethylene glycol, 1.4 g of 2-pyrrolidone, 0.8 g of 1,2-hexanediol, and 14.0 g of ion exchanged water were added. The total amount was made to be 30.0 g to prepare the aqueous IJ ink.

The determination results of the initial viscosity, the change rate of the initial viscosity, and the viscosity of each of the obtained aqueous IJ inks to be evaluated are listed in Table 3. The determination results of the initial particle size, the change rate of the initial particle size, and the particle size are listed in Table 4. The pigments listed in Tables 3 and 4 are as follows.

Pigments

PY180-A Pigment obtained in Production Example 1
PY180-B Pigment obtained in Production Example 2
PY180-C Product name: TONER YELLOW HG (manufactured by Clariant (Japan) K.K.)
PY180-D Product name: PV FAST YELLOW HG01 (manufactured by Clariant (Japan) K.K.)

[Table 3]

| | Pigment | Aspect Ratio | Derivative | SN Ratio | Derivative Added Amount (parts by weight) | Initial Viscosity (mPa·s) | Change Rate (%) | Result |
|---|---|---|---|---|---|---|---|---|
| Ex. 1 | PY180-B | 1.7 | PY180SA-Al-1 | 0.8 | 3 | 3.3 | 119 | ◉ |
| Ex. 2 | PY180-B | 1.7 | PY180SA-Al-1 | 0.8 | 5 | 3.5 | 115 | ◉ |
| Ex. 3 | PY180-B | 1.7 | PY180SA-Al-1 | 0.8 | 10 | 3.6 | 109 | ◉ |
| Ex. 4 | PY180-B | 1.7 | PY180SA-Al-1 analog | 1.2 | 3 | 3.1 | 128 | ○ |
| Ex. 5 | PY180-B | 1.7 | PY180SA-Al-2 | 0.2 | 3 | 3.1 | 124 | ○ |
| Ex. 6 | PY180-B | 1.7 | PY180SA-Al-3 | 1.0 | 3 | 3.5 | 119 | ◉ |
| Ex. 7 | PY180-B | 1.7 | PY180SA-A1-4 | 2.6 | 3 | 3.3 | 118 | ◉ |
| Ex. 8 | PY180-B | 1.7 | PY180SA-Al-5 | 5.0 | 3 | 3.7 | 114 | ◉ |
| Ex. 9 | PY180-B | 1.7 | PY180SA-A1-6 | 25.6 | 3 | 3.5 | 123 | ○ |
| Comp. Ex. 1 | PY180-B | 1.7 | None | - | 0 | 2.9 | 201 | × |
| Comp. Ex. 2 | PY180-B | 1.7 | PY180SA-1 | 0.9 | 3 | 3.1 | 163 | Δ |
| Comp. Ex. 3 | PY180-B | 1.7 | PY180SA-TA | 0.9 | 3 | 3.0 | 176 | Δ |
| Comp. Ex. 4 | PY180-B | 1.7 | PY180SA analog | 1.2 | 3 | 3.1 | 173 | Δ |
| Comp. Ex. 5 | PY180-A | 3.7 | None | - | 0 | 3.4 | 344 | × |
| Comp. Ex. 6 | PY180-A | 3.7 | PY180SA-Al-1 | 0.8 | 3 | 3.7 | 144 | Δ |
| Comp. Ex. 7 | PY180-C | 3.0 | None | - | 0 | 3.4 | 207 | × |
| Comp. Ex. 8 | PY180-C | 3.0 | PY180SA-Al | 0.8 | 3 | 3.2 | 143 | Δ |
| Comp. Ex. 9 | PY180-D | 2.7 | None | - | 0 | 3.1 | 202 | × |
| Comp. Ex. 10 | PY180-D | 2.7 | PY180SA-Al-1 | 0.8 | 3 | 3.2 | 149 | Δ |

[Table 4]

| | Pigment | Aspect Ratio | Derivative | SN Ratio | Derivative Added Amount (parts by weight) | Initial Particle Size (nm) | Change Rate (%) | Result |
|---|---|---|---|---|---|---|---|---|
| Ex. 1 | PY180-B | 1.7 | PY180SA-Al-1 | 0.8 | 3 | 150 | 141 | ◉ |
| Ex. 2 | PY180-B | | PY180SA-Al-1 | 0.8 | 5 | 162 | 129 | ◉ |
| Ex. 3 | PY180-B | | PY180SA-Al-1 | 0.8 | 10 | 170 | 118 | ◉ |
| Ex. 4 | PY180-B | | PY180SA-Al-1 analog | 1.2 | 3 | 165 | 170 | ○ |
| Ex. 5 | PY180-B | | PY180SA-Al-2 | 0.2 | 3 | 136 | 165 | ○ |
| Ex. 6 | PY180-B | | PY180SA-Al-3 | 1.0 | 3 | 147 | 140 | ◉ |
| Ex. 7 | PY180-B | | PY180SA-A1-4 | 2.6 | 3 | 116 | 140 | ◉ |
| Ex. 8 | PY180-B | | PY180SA-Al-5 | 5.0 | 3 | 125 | 144 | ◉ |
| Ex. 9 | PY180-B | | PY180SA-A1-6 | 25.6 | 3 | 130 | 157 | ○ |
| Comp. Ex. 1 | PY180-B | | None | - | 0 | 123 | 545 | × |
| Comp. Ex. 2 | PY180-B | | PY180SA-1 | 0.9 | 3 | 137 | 309 | × |
| Comp. Ex. 3 | PY180-B | | PY180SA-TA | 0.9 | 3 | 132 | 346 | × |
| Comp. Ex. 4 | PY180-B | | PY180SA analog | 1.2 | 3 | 136 | 432 | × |
| Comp. Ex. 5 | PY180-A | 3.7 | None | - | 0 | 269 | 238 | × |
| Comp. Ex. 6 | PY180-A | | PY180SA-Al-1 | 0.8 | 3 | 292 | 142 | × |
| Comp. Ex. 7 | PY180-C | 3.0 | None | - | 0 | 231 | 754 | × |
| Comp. Ex. 8 | PY180-C | | PY180SA-Al | 0.8 | 3 | 205 | 202 | × |
| Comp. Ex. 9 | PY180-D | 2.7 | None | - | 0 | 185 | 405 | × |
| Comp. Ex. 10 | PY180-D | | PY180SA-Al-1 | 0.8 | 3 | 190 | 205 | Δ |

[SN Ratio Measurement]

The SN ratio of the derivatives was calculated using liquid chromatography (product name "Agilent 1100", manufactured by Agilent Technologies Japan, Ltd.). First, 5 mg of the sample to be measured and 10 mL of dimethyl sulfoxide (manufactured by Kanto Chemical Co., Ltd.) were weighed into a 30-mL sample bottle and mixed for 10 seconds

with a shaker (product name "VORTEX-GENIE2", manufactured by Scientific Industries Inc.). The mixture was then mixed in a constant-temperature shaker (product name "PERSONAL-11", manufactured by Taitek Corporation) at 130 rpm for 1 hour while maintaining the temperature at 25°C. The sample to be measured was then distributed into 2-mL sample bottles while being filtered through a 0.45-μm filter (manufactured by Advantech Co., Ltd.), and placed on Agilent 1100 for measurement. The peak detected with a retention time of 11.4 to 12.4 shows the disubstituted derivative, and the peak detected with a retention time of 14.7 to 14.9 shows the monosubstituted derivative. The SN ratio was calculated from these HPLC area values according to the formula below. The HPLC measurement conditions were as follows. The measurement was repeated twice, and the average value was taken as the SN ratio of the measured sample.

SN ratio = area value of disubstituted derivative / area value of monosubstituted derivative [Formula]

[HPLC Measurement Conditions]

Column: C18 U120 S3 (Φ 4.6 mm × 100 mm, 3 μm)
Eluent 1: 30-mM ammonium acetate
Eluent 2: Methanol
Gradient (1/2): 90/10 (to 3 min)

0/100 (to 40 min)
90/10 (to 50 min)

Flow rate: 1.0 mL/min
Oven: 50°C
Wavelength: 400 nm
Injection volume: 1.0 μL

[Viscosity Measurement]

The initial viscosity in Table 3 above was measured by the following method.

The viscosity was measured at 20°C and 30 rpm using an E-type viscometer TV-25 (manufactured by Toki Sangyo Co., Ltd.). After the dispersion was left still in a thermostatic oven at 70°C for one week, the viscosity was measured in the same manner, and the change in viscosity before heating (viscosity ratio) was used to determine the storage stability.

(Criteria)

◉ : Change rate of less than 120%
◦: Change rate of 120% or more and less than 140%
Δ: Change rate of 140% or more and less than 200%
×: Change rate of 200% or more

[Average Dispersed Particle Size]

The initial particle diameters in Table 4 above were measured by the following method.

Measurement was made with a particle size distribution analyzer (product name "Nanotrac Wave II", manufactured by MicrotracBEL Corp.), and the average dispersed particle diameter Mv was calculated. After the dispersion was left still in a thermostatic oven at 70°C for one week, Mv was calculated in the same manner, and the storage stability was determined from the change in Mv from Mv before heating (Mv ratio).

(Criteria)

◉ : Initial particle size of less than 200 nm and change rate of less than 150%

◦: Initial particle size of less than 200 nm and change rate of 150% or more and less than 200%
Δ: Initial particle size of less than 200 nm and change rate of 200% or more and less than 250%
×: Initial particle size of 200 nm or more or change rate of 250% or more

Table 3 above shows that the pigment compositions of the present invention (Examples 1 to 9), which use a derivative with a zeta potential of -20 mV or more and less than 0 mV and a solubility parameter of 21 or less together with Y180 pigment, have a smaller change rate in viscosity than in Comparative Examples 1 to 10. Table 4 above shows that the pigment compositions of the present invention (Examples 1 to 9) have a smaller rate of change in particle size than in Comparative Examples 1 to 10. Thus, it can be seen that the pigment compositions of the present invention are excellent in dispersion stability and storage stability when made into aqueous IJ ink.

## Claims

1. A pigment composition comprising:

    C.I. Pigment Yellow 180; and
    a derivative with a zeta potential of -20 mV or more and less than 0 mV and a solubility parameter of 21 or less.

2. The pigment composition according to claim 1, wherein an aspect ratio of the C.I. Pigment Yellow 180 is from 1.0 to 2.0.

3. The pigment composition according to claim 1 or 2, wherein the derivative is a derivative of the C.I. Pigment Yellow 180.

4. The pigment composition according to claim 1 or 2, wherein the derivative comprises a sulfonic acid group.

5. The pigment composition according to claim 1 or 2, wherein the derivative is a salt of a trivalent metal and the trivalent metal is at least one metal selected from the group consisting of iron, chromium, cobalt, and aluminum.

6. An aqueous pigment dispersion for inkjet ink comprising the pigment composition according to claim 1 or 2.

7. An aqueous pigment ink for inkjet comprising the pigment composition according to claim 1 or 2.

## INTERNATIONAL SEARCH REPORT

International application No.
**PCT/JP2023/042854**

### A. CLASSIFICATION OF SUBJECT MATTER

***C09B 67/20***(2006.01)i; ***C09B 35/22***(2006.01)i; ***C09B 67/46***(2006.01)i
FI: C09B67/20 K; C09B35/22; C09B67/46 A; C09B67/20 L

According to International Patent Classification (IPC) or to both national classification and IPC

### B. FIELDS SEARCHED

Minimum documentation searched (classification system followed by classification symbols)

C09B1/00-69/10; C09D1/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2004-307854 A (TOYO INK MANUFACTURING CO., LTD.) 04 November 2004 (2004-11-04)<br>paragraphs [0010], [0074], [0176]-[0177], [0195], [0198]-[0200], tables 18-19, example 16 | 1-5 |
| Y | paragraphs [0010], [0044], [0074], [0077], [0176]-[0177], [0195], [0198]-[0200], tables 18-19, example 16 | 6-7 |
| Y | JP 2004-535508 A (CLARIANT GMBH) 25 November 2004 (2004-11-25)<br>paragraphs [0007], [0034], examples | 6-7 |
| Y | JP 2008-31194 A (TODA KOGYO CORP) 14 February 2008 (2008-02-14)<br>paragraph [0029], examples | 6-7 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/042854**

| Patent document cited in search report | Publication date (day/month/year) | Patent family member(s) | Publication date (day/month/year) |
|---|---|---|---|
| JP 2004-307854 A | 04 November 2004 | (Family: none) | |
| JP 2004-535508 A | 25 November 2004 | US 2004/0171738 A1<br>paragraphs [0007], [0048], examples | |
| JP 2008-31194 A | 14 February 2008 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002220557 A

### Non-patent literature cited in the description

- *CHEMICAL ABSTRACTS*, 77804-81-0